# EUROPÄISCHE PATENTANMELDUNG

(11) **EP 2 624 115 A1**
(43) Veröffentlichungstag der Anmeldung: **07.08.2013**
(21) Anmeldenummer: 12153910.0
(22) Anmeldetag: 03.02.2012
(51) Int. Cl.: G06F 3/048, G06F 3/023

(54) **Verfahren und elektronisches System zum anwenderoberflächenunabhängigen Ausführen von Funktionen**

(71) Anmelder: basycs GmbH Technische Unternehmens- und Managementberatung, 76703 Kraichtal- Oberöwisheim (DE)
(72) Erfinder: Kiehl, Gerhard, 63110 Rodgau (DE)
(74) Vertreter: Lemcke, Brommer & Partner

(57) **Zusammenfassung**

Die Erfindung betrifft ein Verfahren und ein elektronisches System zum anwenderoberflächenunabhängigen Ausführen von Funktionen und/oder Navigationsbefehlen einer Anwendungssoftware oder eines Anwendungssoftwaresystems, wobei ein Eingabemittel bereitgestellt oder generiert wird, mit dem eine vorbestimmte oder programmierbare Funktion und/oder ein Navigationsbefehl unabhängig von der Anwenderoberfläche aufgerufen werden kann. Des Weiteren kommuniziert ein Interpreter laufend, oder beim Aufruf einer Funktion und/oder eines Navigationsbefehls über dieses Eingabemittel, mit der aktuell ablaufenden Anwendungssoftware, um deren aktuellen Status abzufragen und, abhängig von diesem aktuellen Status, beim Aufruf einer Funktion und/oder eines Navigationsbefehls über dieses Eingabemittel, ein an die aktuell ablaufende Anwendungssoftware und deren aktuellen Status angepasstes Skript auszuführen, so dass die mit dem Eingabemittel aufgerufene Funktion oder den aufgerufenen Navigationsbefehl initiiert oder ausgeführt wird.

## Beschreibung

Die Erfindung betrifft ein Verfahren und ein elektronisches System zum anwenderoberflächenunabhängigen Ausführen von Funktionen und/oder Navigationsbefehlen einer Anwendungssoftware oder eines Anwendungssoftwaresystems.

Unter Anwendungssoftware ist hierbei ein Programm oder ein Programmpaket für die elektronische Datenverarbeitung zu verstehen, das mit einem Anwender interagiert und zur Lösung von anwenderspezifischen Problemen oder Verwaltungsaufgaben dient. Ein Anwendungssoftwaresystem im Sinne der vorliegenden Erfindung ist ein Paket unterschiedlicher, aufeinander abgestimmter Anwendungssoftwaremodule oder eine Suite von einander ergänzenden Anwendungssoftwareprodukten.

Die Interaktion zwischen einem Anwender und der auf einem Computer ablaufenden Anwendungssoftware erfolgt durch Eingeben von Daten und insbesondere durch das Aufrufen von Funktionen der Anwendungssoftware bzw. von Navigationsbefehlen über Eingabemittel, üblicherweise eine Tastatur, eine Maus oder ein Touchpad. Hierfür gibt es Funktionstasten und Tastenkombinationen bzw. Shortcuts auf Tastaturen und Touchpads sowie Menübefehle, die auf einem Anzeigegerät, insbesondere einem Bildschirm oder Display, angezeigt und per Mausclick angewählt werden. Navigationsaufgaben werden im allgemeinen ebenfalls per Mausclick oder Funktionstasten bzw. Navigationstasten aufgerufen.

Anwendungssoftware generiert bei ihrer Benutzung im allgemeinen, abhängig vom Status des ablaufenden Anwendungsprogramms, unterschiedliche Anwenderoberflächen, die dem Anwender auf einem Anzeigegerät angezeigt werden, so dass dieser mit der Anwendungssoftware interagieren kann. Die Anwenderoberflächen sind oft mit Navigationsleisten und Funktions- bzw. Menüleisten versehen, um innerhalb der Anwendungssoftware zu navigieren oder bestimmte Funktionen der Anwendungssoftware aufzurufen. Ergänzend gibt es oft auch Tastenkombinationen für'die entsprechenden Funktionen bzw. Navigationsbefehle, so dass der Anwender unterschiedliche Eingabegeräte verwenden kann. Allerdings ist es oft der Fall, dass bestimmte Funktionen oder Navigationsbefehle mehrere Mausclicks erfordern, da zunächst ein Auswahlmenü und gegebenenfalls ein bis mehrere Untermenüs angewählt werden müssen, bis die gewünschte Funktion aufrufbar ist. Darüber hinaus ist dies oft abhängig von der momentanen Anwenderoberfläche, also vom momentanen Status der ablaufenden Anwendungssoftware. Auch Funktionstasten und Tastenkombinationen sind oft ganz unterschiedlich belegt, so dass auch zum Aufruf einer einzigen, gleichbleibenden Funktion über Funktionstasten bzw. Tastenkombinationen der aktuelle Status der ablaufenden Anwendungssoftware und somit die momentane Anwenderoberfläche berücksichtigt werden muss, um die für den Aufruf einer bestimmten Funktion bzw. eines Navigationsbefehls erforderliche Funktionstaste oder Tastenkombination zu betätigen.

Die Problematik, für eine bestimmte, von verschiedenen Anwenderoberflächen aus aufrufbare Funktion bzw. einen Navigationsbefehl je nach momentanem Status der Anwendungssoftware mit unterschiedlichen Tastenkombinationen oder Funktionstasten oder jeweils mehreren, gegebenenfalls von der Anwenderoberfläche abhängigen Mausclicks aufzurufen, besteht bereits bei vielen Anwendungssoftwareprodukten in sich. Insbesondere jedoch bei Anwendungssoftwaresystemen, die aus mehreren unterschiedlichen Softwaremodulen oder einer Suite von Anwendungssoftwareprodukten bestehen, tritt die genannte Problematik gehäuft auf. Hier wäre außerdem auch noch die Problematik zu berücksichtigen, dass die Anwendungssoftware bzw. die Suite nur zu bedienen ist, wenn vorher eine entsprechende Nutzeridentifikation durchgeführt wurde. Dies gilt in einer komplexen Systemlandschaft für mehrere Systeme, die jeweils einzeln zu betrachten sind und somit jeweils eine gesonderte Nutzeridentifikation benötigen.

Die Bedienung einer komplexen Anwendungssoftware bzw. eines komplexen Anwendungssoftwaresystems kann durch die geschilderte Problematik recht aufwändig bis unübersichtlich werden, wodurch die Effizienz des Arbeitsablaufs beeinträchtigt wird.

Der vorliegenden Erfindung liegt daher die Aufgabe zugrunde, ein Verfahren sowie ein elektronisches System zur Verfügung zu stellen, mit dem der Aufruf einer bestimmten Funktion und/oder eines Navigationsbefehls unabhängig von der Anwenderoberfläche mit immer der gleichen Aktion durchgeführt werden kann.

Gelöst ist die vorliegende Aufgabe durch ein Verfahren mit den Merkmalen des beigefügten Anspruchs 1 sowie durch ein elektronisches System mit den Merkmalen des beigefügten Anspruchs 7. Bevorzugte Weiterbildungen des erfindungsgemäßen Verfahrens finden sich in den Ansprüchen 2 bis 6; vorteilhafte Ausgestaltungen des erfindungsgemäßen elektronischen Systems sind in den Ansprüchen 8 bis 12 niedergelegt. Entsprechende Softwareprodukte finden sich in den Ansprüchen 13 bis 15.

Die vorliegende Erfindung stellt demnach ein Verfahren und ein elektronisches System zur Verfügung, mit dem Funktionen und/oder Navigationsbefehle einer Anwendungssoftware oder eines Anwendungssoftwaresystems unabhängig von der momentanen Anwenderoberftäche aufgerufen und ausgeführt werden können. Hierzu wird ein Eingabemittel bereitgestellt oder generiert, mit dem eine vorbestimmte oder programmierbare Funktion und/oder ein Navigationsbefehl unabhängig von der Anwenderoberfläche aufgerufen werden kann. Dieses Eingabemittel kann eine Taste einer Tastatur oder ein Tastensymbol für ein Touchpad sein und demnach als Hardware oder als Software ausgestaltet sein. Auch eine kombinierte Ausbildung als Hardware und Software ist möglich, beispielsweise indem das Eingabemittel aus einem Sprachbefehl besteht, das gegebenenfalls nicht nur ein Treiber für ein Mikrofon ist, sondern auch das Mikrofon selbst beinhalten kann.

Mit diesem Eingabemittel, das eine bestimmte Taste der normalen Tastatur des Computers, eine bestimmte Taste eines Zusatzgeräts für den Computer, ein Tastensymbol auf einem mit dem Computer interagierenden Smartphone oder ein in den Bildschirm des Computers eingeblendetes Symbol sein kann, kann ein Anwender mit einem Tastendruck oder einer entsprechenden Aktion immer die gleiche Funktion oder den gleichen Navigationsbefehl ausführen, egal in welcher Anwenderoberfläche der Anwendungssoftware oder des Anwendungssoftwaresystems er sich gerade befindet. Diese Funktion bzw. dieser Navigationsbefehl kann vorgegeben sein; im Rahmen der vorliegenden Erfindung ist es jedoch auch möglich, dass der Anwender eine Funktion bzw. einen Navigationsbefehl selbst bestimmt, also die Taste oder das Symbol des Eingabemittels mit einer bestimmten gewünschten Funktion oder einem bestimmten Navigationsbefehl verknüpft.

Damit das Eingabemittel Funktionen und/oder Navigationsbefehle unabhängig von der momentanen Anwenderoberfläche ausführen kann, umfasst die vorliegende Erfindung außerdem einen Interpreter, der vorzugsweise laufend, und jedenfalls beim Aufruf einer Funktion und/oder eines Navigationsbefehls über das Eingabemittel mit der Anwendungssoftware kommuniziert, um deren aktuellen Status abzufragen. Dieser Interpreter ist ein Softwaremodul, das im Computer, auf dem die Anwendungssoftware abläuft, und/oder in einem Zusatzgerät, beispielsweise einer Zusatztastatur installiert sein kann, und/oder als App für ein Smartphone oder einen Tabletcomputer verwirklicht ist. Soweit der Interpreter als Teil eines Zusatzgeräts oder als App für ein Smartphone und dergleichen ausgeführt ist, generiert er vorzugsweise das Eingabemittel selbst.

Durch die Kommunikation des Interpreters mit der aktuell ablaufenden Anwendungssoftware kennt der Interpreter den aktuellen Status und somit auch die aktuelle Anwenderoberfläche der ablaufenden Anwendungssoftware. Erfindungsgemäß führt er dann beim Aufruf einer Funktion und/oder eines Navigationsbefehls über das Eingabemittel ein Skript aus, um die mit dem Eingabemittel aufgerufene Funktion oder den aufgerufenen Navigationsbefehl zu initiieren oder auszuführen. Dieses Skript ist erfindungsgemäß an den aktuellen Status der aktuell ablaufenden Anwendungssoftware angepasst, wobei der Interpreter beispielsweise das entsprechend angepasste Skript abhängig vom aktuellen Status der Anwendungssoftware auswählt oder dieses vorzugsweise nach einem vorgegebenen Algorithmus selbst anpasst, so dass die mit dem Eingabemittel aufgerufene Funktion bzw. der Navigationsbefehl von der Anwendungssoftware ausgeführt wird.

In dem an die aktuell ablaufende Anwendungssoftware und deren aktuellen Status angepassten Skript, das vom erfindungsgemäßen Interpreter ausgeführt wird, können nach einer Weiterbildung der vorliegenden Erfindung auch individuelle Daten eines Anwenders hinterlegt sein, was insbesondere dann sinnvoll ist, wenn der Interpreter nicht auf dem Computer, auf dem die Anwendungssoftware abläuft, installiert wird, sondern Teil eines separaten Geräts ist, das der Anwender mit sich führen und per Kabel oder drahtlos mit dem Computer verbinden kann; es wäre beispielsweise möglich, ein Smartphone als ein solches Zusatzgerät zu verwenden und den Interpreter sowie das Eingabemittel als App für dieses Smartphone auszugestalten. Nach dieser Weiterbildung der Erfindung wird ermöglicht, mit dem erfindungsgemäßen Eingabemittel und dem erfindungsgemäßen Interpreter zugangsbeschränkte Funktionen und/oder Navigationsbefehle zu initiieren oder auszuführen, wie beispielsweise das Einloggen in eine Benutzeroberfläche, das Einwählen in eine Intranet- oder Internet-Verbindung, das Starten einer bestimmten Transaktion etc. Im Stand der Technik müssen solche Funktionen üblicherweise in einem Abfragedialog per Kennworteingabe oder mit einer Smartcard oder dergleichen aufgerufen werden, da der Zugang zu solchen Funktionen auf einen bestimmten Anwenderkreis beschränkt ist. Mit der vorliegenden Erfindung ist es gemäß dieser Weiterbildung also beispielsweise möglich, sich mit einem einzigen Tastendruck oder einem einzigen Click bei einer zugangsbeschränkten Anwendungssoftware anzumelden.

Das Eingabemittel und der Interpreter können im Rahmen der vorliegenden Erfindung Bestandteile eines Zusatzgeräts sein, das an den Computer und/oder an eines seiner Peripheriegeräte, also insbesondere die Tastatur anschließbar ist. Dies kann eine Zusatztastatur oder ein Touchpad sein. Das genannte Zusatzgerät kann jedoch auch drahtlos, insbesondere mittels Technologien, die unter den (geschützten) Marken Wi-Fi, Bluethooth etc. bekannt sind, mit dem Computer verbindbar sein. Das erfindungsgemäße Verfahren kann mit einem Smartphone oder einem Tabletcomputer als Zusatzgerät gesteuert werden, auf dem eine App installiert ist, die den erfindungsgemäßen Interpreter und das Eingabemittel, das gegebenenfalls vom Interpreter bedarfsweise generiert werden kann, beinhaltet. Selbstverständlich kann ein solches Zusatzgerät auch über eine Internetverbindung mit dem Computer verbunden werden, auf dem die eigentliche Anwendungssoftware abläuft.

Obwohl die vorliegende Erfindung nicht auf eine bestimmte Anwendungssoftware oder ein bestimmtes Anwendungssoftwaresystem beschränkt ist, bietet sie dennoch besondere Vorteile bei Menübefehlen und/oder Transaktionen von SAP-Software und/oder Software aus dem SAP-Umfeld ("SAP" ist ein für die SAP AG in Walldorf, DE geschütztes Kennzeichen). Die vorliegende Erfindung kann die Steuerung der SAP-Menüs vereinheitlichen und zum Teil Funktionen im SAP-Umfeld bedienerfreundlich ausführen.

Gegenstand der vorliegenden Erfindung ist schließlich ein Interpreter für das beschriebenen erfindungsgemäße Verfahren und/oder das entsprechende elektronische System, sowie ein Datenträger mit einem solchen Interpreter und/oder einem erfindungsgemäßen Eingabemittel und ein Datenstrom, der einen solchen Interpreter und/oder ein solches Eingabemittel enthält.

Ein Ausführungsbeispiel für ein erfindungsgemäß ausgestaltetes elektronisches System zum Einsatz im SAP-Umfeld wird im Folgenden anhand der beigefügten Zeichnungen näher beschrieben und erläutert. Es zeigen:
- Figur 1: eine schematische Darstellung eines Zusatzgeräts mit Eingabemittel und Interpreter.
- Figur 2: das Zusatzgerät aus Figur 1 mit Startmenü (Figur 2a) und zwei Untermenüs (Figur 2b und Figur 2c);
- Figur 3: das Zusatzgerät aus Figur 1 im Arbeitsmenü;
- Figur 4: ein Beispiel für einen Funktionsbereich F2 aus Figur 3;
- Figur 5: das Zusatzgerät aus Figur 1 im Customizing-Menü,
- Figur 6: ein Ablaufdiagramm zur Menüauswahl des Zusatzgeräts aus Figur 1.

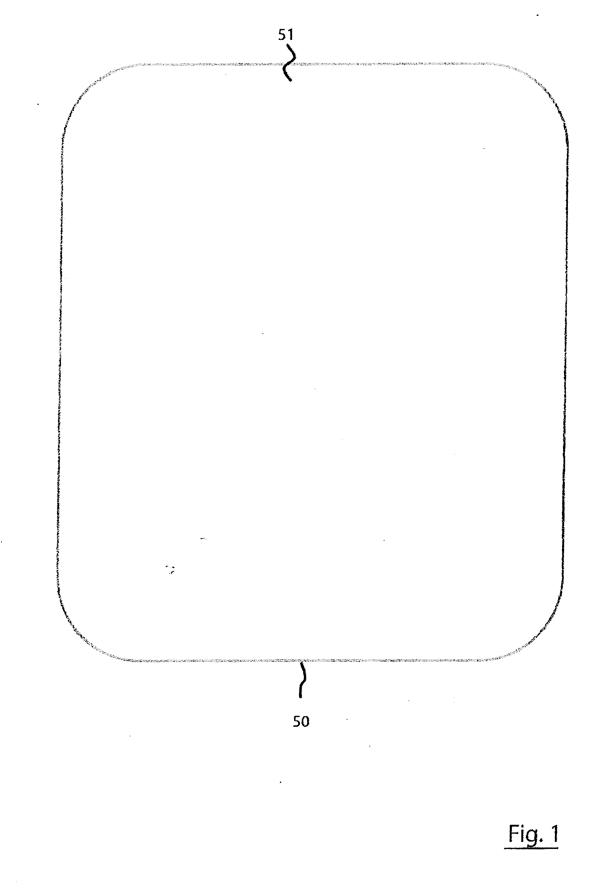

Figur 1 zeigt eine schematische Darstellung eines Zusatzgeräts 50, das mit einem (nicht dargestellten) Computer, auf dem eine Anwendungssoftware abläuft, verbunden werden kann. Bei diesem Zusatzgerät 50 handelt es sich also um ein individualisiertes, vom Anwender mit sich geführtes, kleines und leichtes Gerät, mit dem die Erfindung umgesetzt werden kann. Bestandteile des Zusatzgeräts 50 sind ein als Software ausgeführter, und daher nicht sichtbarer bzw. nicht mit einem Bezugszeichen versehener Interpreter, sowie ein Eingabemittel 51, das vorliegend als Touchscreen ausgestaltet ist und mit unterschiedlichen, softwaregenerierten Bedienungstasten unterlegt werden kann.

Der Interpreter kommuniziert mit der Anwendungssoftware, die auf dem Computer abläuft. Der Interpreter liest den aktuellen Status des ablaufenden Anwendungsprogramms und transformiert die aktuellen Funktions- bzw. Navigationsbefehle und -tasten auf softwaregenerierte Tasten auf dem Touchscreen 51 des Zusatzgeräts 50. Der Interpreter kann entweder auf dem Zusatzgerät 50 selbst und/oder auf dem Computer ablaufen. Wenn der Interpreter auf dem Computer läuft, wird dieser über einen im Zusatzgerät 50 befindlichen Controller gesteuert.

Die im vorliegenden Ausführungsbeispiel ablaufende Anwendungssoftware ist eine SAP-Software oder eine Software aus dem SAP-Umfeld, so dass das Zusatzgerät 50 entsprechende Funktionen der SAP-Software aufrufen kann.

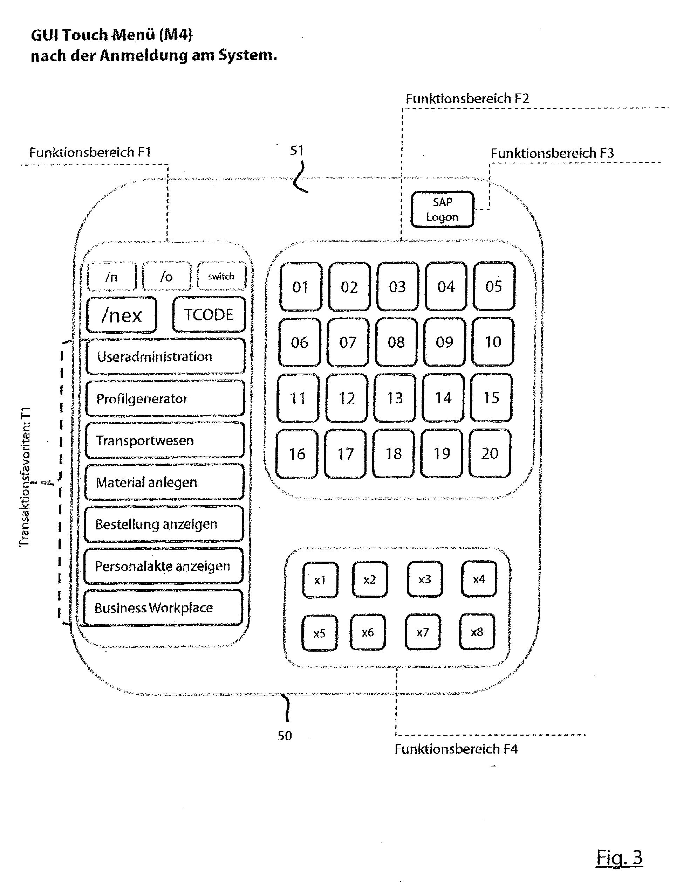

Figur 3 zeigt beispielhaft vom Zusatzgerät 50 generierte Eingabemittel F1, F2, F3, F4 in einem Menü M4 nach einer erfolgten Anmeldung am System.

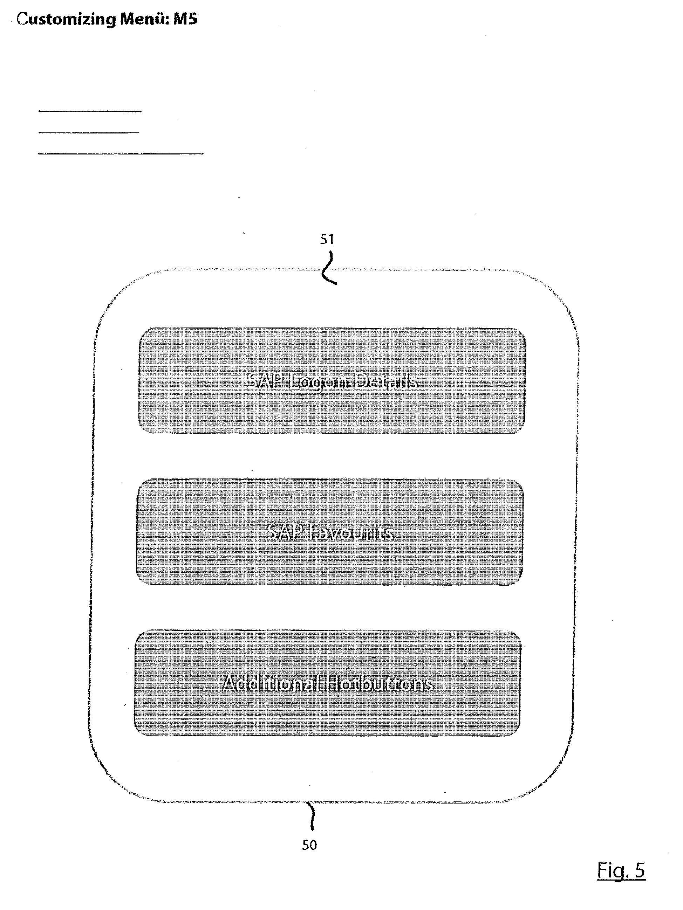

Das Eingabemittel F1 ist ein Funktionsbereich, der Transaktionsbuttons, wie Favoriten, Moduswechsel und Abmelden umfasst. Der Funktionsbereich F1 umfasst einen Feststellbutton "/n" zum Wählen, ob eine Transaktion im gleichen Modus geöffnet wird, während ein Feststellbutton "/o" zum Wählen dient, ob eine Transaktion in einem neuen Modus geöffnet wird. Ein "switch"-Button ist als Umschaltbutton zur Doppelbelegung der Tasten einer Tastengruppe "Transaktionsfavoriten" T1 vorgesehen. Ein "/nex"-Button initiiert ein sofortiges Beenden aller offenen SAP-Logon-Modi eines Systems bzw. eines Mandanten, während ein "TCODE"-Button zum Springen in das T-Code-Eingabefeld dient, so dass der Anwender manuell eine neue Transaktion auswählen kann. Die genannten Transaktionsfavoriten T1 können vom Anwender über ein Customizing-Menü (Figur 5) frei mit SAP-Transaktionen belegt werden, damit der Anwender, unabhängig vom aktuellen Status der Anwendungssoftware, direkt zu einer neuen Transaktion springen kann, ohne dabei vorher das Standard-SAP-Easy-Access-Menü aufrufen zu müssen. Bei den Transaktionsfavoriten T1 handelt es sich also um programmierbare Eingabemittel, wobei in Figur 3 beispielhafte Transaktionen aufgeführt sind.

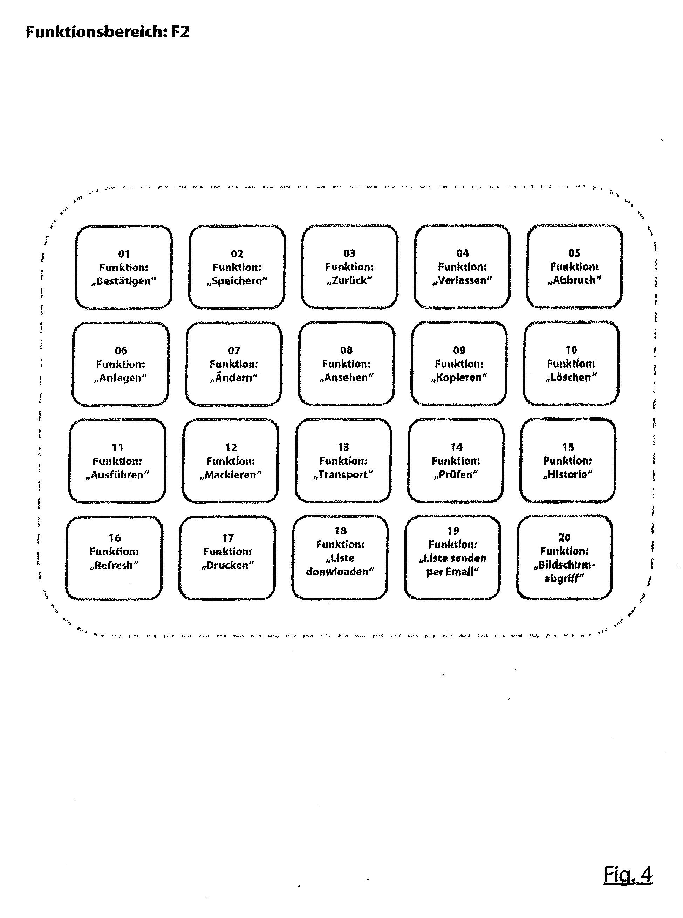

Ein Funktionsbereich F2 des Zusatzgeräts 50 bzw. auf dessen Touchscreen 51 enthält SAP-Activity-Buttons 01 bis 20, die SAP-Aktionen in verschiedenen Transaktionen steuern. Es handelt sich um SAP-Menü-Navigations-/Funktions-Buttons, um Aktionen, wie Anlegen, Ändern, Ansehen, Kopieren, Löschen, Ausführen, Markieren, Auffrischen, Drucken, Liste downloaden, Liste per E-Mail senden und dergleichen, aufzurufen. Eine beispielhafte Belegung dieser Activity-Buttons 01 bis 20 ist in Figur 4 dargestellt.

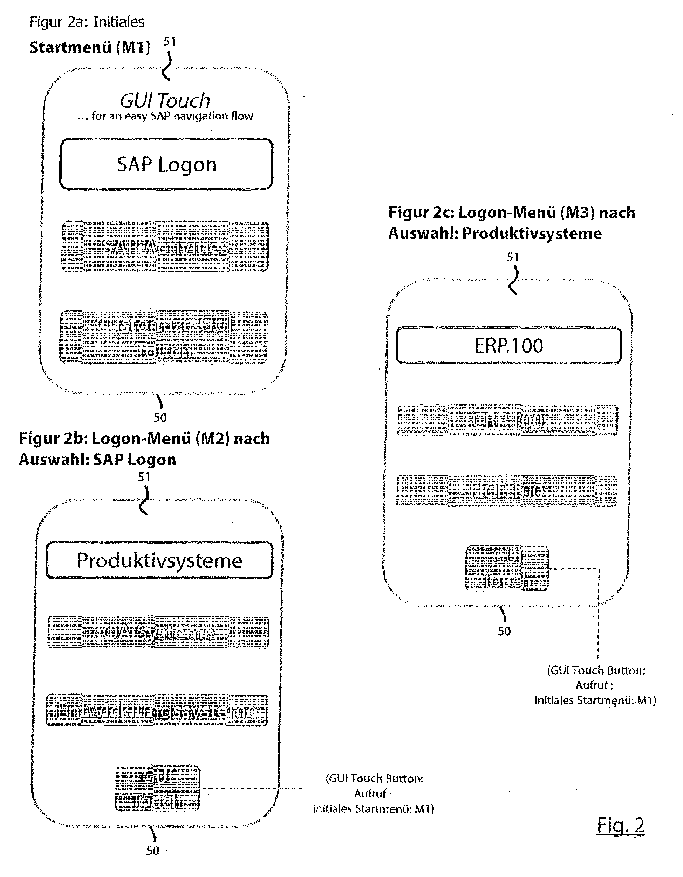

Ein Funktionsbereich F3 im Touchscreen 51, des Zusatzgeräts 50 in Figur 3 ist ein SAP-Logon-On-Button zum Aufruf eines initialen Startmenüs M1 (Figur 2).

Ein vierter Funktionsbereich F4 im Touchscreen 51 des Zusatzgeräts 50 enthält anwenderspezifische, frei definierbare "Hot-Buttons" X1 bis X8 für frei definierbare Shortcuts, mit denen beispielsweise ein Browser, ein spezieller Ordner oder Suchfunktionen einer Standardsoftware aufgerufen und gestartet werden können. Diese Hotbuttons X1 bis X8 können ebenfalls über das Customizing-Menü M5 (Figur 5) definiert werden.

Anhand des Funktionsbereichs F3, dem SAP-Logon-Button (Figur 3) wird klar, dass das dort dargestellte Zusatzgerät 50, in Interaktion mit dem Interpreter, anwenderspezifische Daten aufruft und verwaltet, die den Anwender und seine Zugangsberechtigungen identifizieren. Diese Daten sind verschlüsselt abgelegt und können mit einem einzigen Druck auf eine Taste eines Logon -Menüs den Anwender an der SAP-Anwendungssoftware anmelden, ohne ein Dialogfeld bedienen oder gar einen Benutzernamen, ein Kennwort, einen Mandanten und dergleichen eingeben zu müssen.

Das genannte Logon-Menü ist als Menü M2 in Figur 2b dargestellt. Auf dieses Logon -Menü gelangt man über den Funktionsbereich F3 in Figur 3 oder über ein initiales Startmenü M1, das in Figur 2a dargestellt ist. Auch im initialen Startmenü M1 ist ein SAP-Logon-Button vorhanden. Figur 2c zeigt beispielhaft ein Untermenü M3, das mit der Taste "Produktivsysteme" im Logon-Menü M2 in Figur 2b aufgerufen wird. Nach der Anmeldung am System über das in Figur 2c dargestellte Menü M3 erscheint dann das in Figur 3 dargestellte Menü M4.

Alle Tasten der Funktionsbereiche F1 bis F4 im Menü M4 sowie der Menüs M1 - M3 (Figur 2a bis 2c) sind vorzugsweise lediglich Eingabesymbole auf einem Touchscreen 51 des Zusatzgeräts 50, so dass das Zusatzgerät 50 beispielsweise auch ein handelsüblicher Tabletcomputer oder ein Smartphone sein kann.

Ein Beispiel für die Vereinfachung der Bedienung der SAP-Anwendungssoftware ist das Umschalten in den Änderungsmodus in einer SAP-Transaktion. [n der SAP-User-Administration (Transaktion: /nSU01) kann der Änderungsmodus mit der Tastenkombination: Umschalt + F6 aufgerufen werden; im Umfeld der Batch-Job-Administration (Transaktion: /nSM37) kann der Änderungsmodus mit Strg + Umschalt + F7 aufgerufen werden, wohingegen im ABAP-Editor (Transaktion: /nSE38) der Änderungsmodus mit Strg + F1 aufgerufen wird.

Durch Verbinden des Zusatzgeräts 50 und des darin enthaltenen erfindungsgemäßen Interpreters mit dem Computer, kann der Interpreter mit der Anwendungssoftware kommunizieren und hierdurch erkennen, ob der Anwender, um im Beispiel zu bleiben, in der SAP-User-Administration, in der Batch-Job-Administration oder im ABAP-Editor arbeitet. Drückt der Anwender nun die entsprechende Funktionstaste im Funktionsbereich F3 (Figur 4), hier im Beispiel also die Änderungs-Funktion, führt der Interpreter ein Skript aus, mit dem die Anwendungssoftware jeweils so angesprochen wird, dass das gewünschte Umschalten in den Änderungsmodus erfolgt. Der Interpreter führt also ein Skript aus, das in der User-Administration den Tastendruck (Änderungs-Funktions-Button) des Zusatzgeräts 50 in die Tastenkombination Umschalt + F6 übersetzt, während er in der Batch-Job-Administration denselben Tastendruck auf dem Zusatzgerät 50 in die Tastenkombination Strg + Umschalt + F7 übersetzt. Der Interpreter führt also jeweils ein an den aktuellen Status der ablaufenden Anwendungssoftware angepasstes Skript aus, um zu gewährleisten, dass der Anwender für eine bestimmte Funktion unabhängig von der aktuellen Anwenderoberfläche eine bestimmte Eingabe tätigen bzw. eine bestimmte Taste betätigen muss.

Das Klicken auf Buttons und das Browsen durch das SAP-Menü kann demnach zum größten Teil über das Zusatzgerät 50 gesteuert werden, wodurch ein angenehmeres Arbeiten und vor allem eine hohe Zeitersparnis erzielt wird.

In Figur 5 ist beispielhaft ein Customizing-Menü M5 dargestellt, das zum individuellen Einrichten der Benutzeroberfläche des Zusatzgeräts 50 und somit der anwenderbezogenen Einstellungen dient. Eine erste Taste SAP-Logon-Details führt zum Einrichten der SAP-Logon-Untermenüstruktur, der Benutzerdaten und der Verbindungsdaten. Eine SAP-Favourites-Schaltfläche dient zur Belegung der anwenderspezifischen SAP-Transaktionen / Favoriten. Eine Schaltfläche "Additional Hot-Buttons" dient zur Belegung der anwenderspezifischen Funktionen des Funktionsfelds F4 in Figur 3.

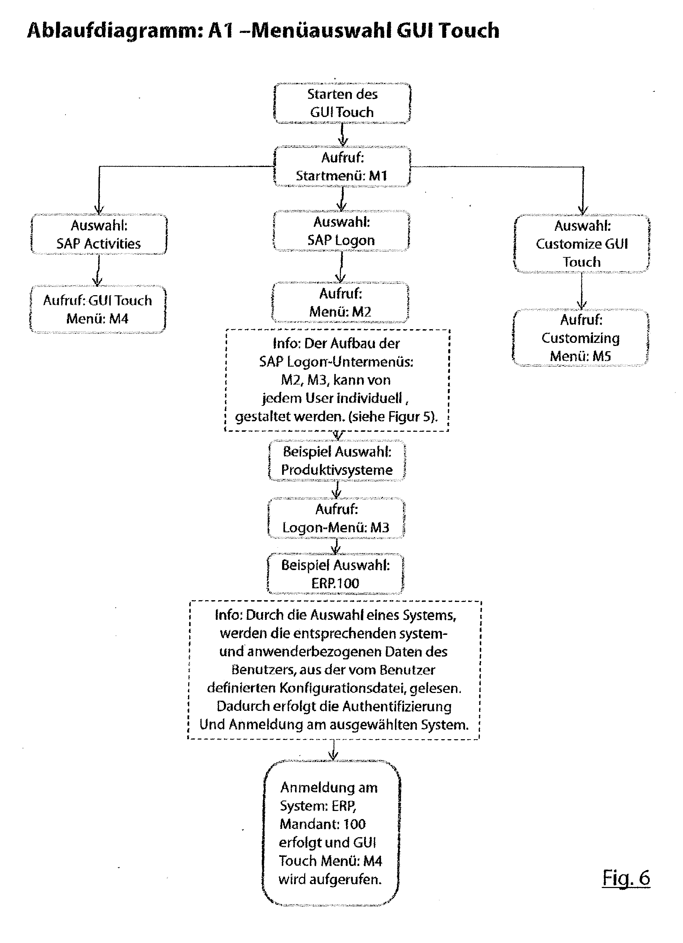

Figur 6 zeigt schließlich ein Ablaufdiagramm der Menüauswahl im Zusatzgerät 50 der vorhergehenden Figuren.

## Patentansprüche

1. Verfahren zum anwenderoberflächenunabhängigen Ausführen von Funktionen und/oder Navigationsbefehlen einer Anwendungssoftware oder eines Anwendungssoftwaresystems,
wobei ein Eingabemittel bereitgestellt oder generiert wird, mit dem eine vorbestimmte oder programmierbare Funktion und/oder ein Navigationsbefehl unabhängig von der Anwenderoberfläche aufgerufen werden kann, und wobei ein Interpreter laufend, oder beim Aufruf einer Funktion und/oder eines Navigationsbefehls über dieses Eingabemittel, mit der aktuell ablaufenden Anwendungssoftware kommuniziert, um deren aktuellen Status abzufragen und, abhängig von diesem aktuellen Status, beim Aufruf einer Funktion und/oder eines Navigationsbefehls über dieses Eingabemittel, ein an die aktuell ablaufende Anwendungssoftware und deren aktuellen Status angepasstes Skript ausführt, um die mit dem Eingabemittel aufgerufene Funktion oder den aufgerufenen Navigationsbefehl zu initiieren oder auszuführen.

2. Verfahren nach Anspruch 1,
**dadurch gekennzeichnet,**
**dass** der Interpreter das Skript selbständig an den aktuellen Status der aktuell ablaufenden Anwendungssoftware anpasst, um die mit dem Eingabemittel aufgerufene Funktion oder den aufgerufenen Navigationsbefehl zu initiieren oder auszuführen.

3. Verfahren nach einem der Ansprüche 1 oder 2,
dadurch_gekennzeichnet,
dass ein Eingabesymbol für ein Touchpad oder eine App als Eingabemittel verwendet wird.

4. Verfahren nach einem der Ansprüche 1 oder 2,
**dadurch gekennzeichnet,**
**dass** ein Sprachbefehl als Eingabemittel verwendet wird.

5. Verfahren nach mindestens einem der Ansprüche 1 bis 4,
**dadurch gekennzeichnet,**
**dass** es zum anwenderoberflächenunabhängigen Ausführen von Menübefehlen und/oder Transaktionen von SAP Software und/oder SAP-Umfeld-Software dient.

6. Verfahren nach mindestens einem der Ansprüche 1 bis 5,
**dadurch gekennzeichnet,**
**dass** in dem an die aktuell ablaufende Anwendungssoftware und deren aktuellen Status angepassten Skript individuelle Daten eines Anwenders gespeichert werden können, um zugangsbeschränkte Funktionen und/oder Navigationsbefehle zu initiieren oder auszuführen.

7. Elektronisches System zum Durchführen eines Verfahrens nach mindestens einem der Ansprüche 1 bis 6, umfassend einen Computer mit darauf ablaufender Anwendungssoftware,
ein Eingabemittel, mit dem eine vorbestimmte oder programmierbare Funktion und/oder ein Navigationsbefehl unabhängig von der Anwenderoberfläche aufgerufen werden kann,
sowie einen Interpreter, der solcherart ausgebildet ist, dass er laufend, oder beim Aufruf einer Funktion und/oder eines Navigationsbefehls über dieses Eingabemittel, mit der aktuell ablaufenden Anwendungssoftware kommuniziert, um deren aktuellen Status abzufragen und, abhängig von diesem aktuellen Status, beim Aufruf einer Funktion und/oder eines Navigationsbefehls über dieses Eingabemittel, ein an die aktuell ablaufende Anwendungssoftware und deren aktuellen Status angepasstes Skript ausführt, um die mit dem Eingabemittel aufgerufene Funktion oder den aufgerufenen Navigationsbefehl zu initiieren oder auszuführen.

8. Elektronisches System nach Anspruch 7,
**dadurch gekennzeichnet,**
**dass** der Interpreter solcherart ausgestaltet ist, dass er das Skript selbständig an den aktuellen Status der aktuell ablaufenden Anwendungssoftware anpasst, um die mit dem Eingabemittel aufgerufene Funktion oder den aufgerufenen Navigationsbefehl zu initiieren oder auszuführen.

9. Elektronisches System nach einem der Ansprüche 7 oder 8,
**dadurch gekennzeichnet,**
**dass** das Eingabemittel eine Eingabetaste oder Tastatur, ein Eingabesymbol für ein Touchpad, eine App oder ein Spracherkennungsmodul für einen Sprachbefehl ist.

10. Elektronisches System nach mindestens einem der Ansprüche 7 bis 9,
**dadurch gekennzeichnet,**
**dass** in das an die aktuell ablaufende Anwendungssoftware und deren aktuellen Status angepasste Skript individuelle Daten eines Anwenders speicherbar sind, um zugangsbeschränkte Funktionen und/oder Navigationsbefehle zu initiieren oder auszuführen.

11. Elektronisches System nach mindestens einem der Ansprüche 7 bis 10,
**dadurch gekennzeichnet,**
**dass** das Eingabemittel Bestandteil eines Zusatzgeräts ist, das an den Computer und/oder an eines seiner Peripheriegeräte anschließbar oder drahtlos mit dem Computer verbindbar ist.

12. Elektronisches System nach mindestens einem der Ansprüche 7 bis 11,
**dadurch gekennzeichnet,**
**dass** die auf dem Computer ablaufende Anwendungssoftware SAP Software und/oder SAP-Umfeld-Software ist, und dass die über das Eingabemittel aufgerufene Funktionen und/oder Navigationsbefehle Menübefehle und/oder Transaktionen von SAP Software und/oder SAP-Umfeld-Software sind.

13. Interpreter für ein Verfahren nach mindestens einem der Ansprüche 1 bis 6 und/oder für ein elektronisches System nach mindestens einem der Ansprüche 7 bis 12.

14. Datenträger mit einem Interpreter und/oder einem Eingabemittel für ein Verfahren nach mindestens einem der Ansprüche 1 bis 6 und/oder für ein elektronisches System nach mindestens einem der Ansprüche 7 bis 12.

15. Datenstrom, enthaltend einen Interpreter und/oder ein Eingabemittel für ein Verfahren nach mindestens einem der Ansprüche 1 bis 6 und/oder für ein elektronisches System nach mindestens einem der Ansprüche 7 bis 12.
